# EUROPÄISCHE PATENTSCHRIFT

(11) **EP 0 387 516 B1**
(45) Veröffentlichungstag und Bekanntmachung des Hinweises auf die Patenterteilung: **26.04.1995**
(21) Anmeldenummer: 90102052.9
(22) Anmeldetag: 02.02.1990
(51) Int. Cl.: H04B 1/20, H04B 1/38

(54) **Kombination eines Autoradios mit anderen Kommunikationsmitteln**
Combination of a car radio and other communication means
Combinaison d'un autoradio avec d'autres moyens de communication

(30) Priorität: 06.02.1989 DE 3903461
(43) Veröffentlichungstag der Anmeldung: 19.09.1990
(73) Patentinhaber: Grundig E.M.V. Elektro-Mechanische Versuchsanstalt Max Grundig GmbH & Co. KG, 90762 Fürth (DE)
(72) Erfinder: Fischelmayer, Heinrich c/o GRUNDIG E.M.V., D-8510 Fürth/Bay (DE)

(56) Entgegenhaltungen:
- GB-A- 2 204 755
- US-A- 3 937 886
- US-A- 4 090 134
- PATENT ABSTRACTS OF JAPAN,vol. 7, no. 57 (P-181)(1202) 9.März 1983; & JP-A-57 203 273

## Beschreibung

Die Erfindung bezieht sich auf eine Einrichtung, die den gleichzeitigen Betrieb eines Rundfunkempfängers, insbesondere eines Autoradios, und weiteren Kommunikationsmitteln (z.B. Funkgerät, Autotelefon, sprechender Bordcomputer) im Auto erlaubt.

Beim gleichzeitigen Betrieb eines Funkgerätes und eines Autoradios war es bisher üblich, daß bei einem ankommenden Funkruf das Funkgerät ein Relais ansteuert, welches die Stromversorgung des Autoradios unterbricht. Diese Lösung führt vor allem bei Geräten mit höherer Ausgangsleistung zu unschönen Schaltgeräuschen, die man vermeiden möchte.

Eine Verbesserung dieses Verfahrens enthält z.B. das Autorradio Digatec 505 der Firma Magnat Technologies, das eine Schnittstelle zu einem Autotelefon hat. Das Digatec 505 wird bei einem eingehenden Anruf automatisch auf leise gestellt, wodurch das Schaltgeräusch, das bei Unterbrechung der Stromzufuhr auftritt, vermieden wird. Aber auch bei dieser Lösung werden noch nicht alle Möglichkeiten ausgeschöpft den Hörkomfort zu steigern, die Bedienung zu erleichtern und zusätzlich den Platzbedarf zu verringern.

In der deutschen Patentanmeldung DE-A 37 26 784 wird ein Autoradio mit mehreren Zusatzgeräten beschrieben, wobei alle Geräte zu einer baulichen Einheit zusammengefaßt sind, wodurch die Bedienung besser zugänglich und einfacher wird, und auch der Platzbedarf insgesamt verringert wird.
Der Nachteil dieser Lösung besteht darin, daß insgesamt ein großes Gerät entsteht, das nicht in jedem Auto Platz findet, und jeweils nur ein Gerät der Kombination durch einen Auswahlschalter aktiviert werden kann.

Aufgabe der Erfindung ist es deshalb den gleichzeitigen Betrieb eines Autoradios und anderen Kommunikationsmitteln zu ermöglichen, wobei der Bedien- und Hörkomfort erhöht und der Platzbedarf veringert werden soll.

Diese Aufgabe wird gemäß der Erfindung ausgehend von den Merkmalen des Oberbegriffes des Anspruches 1 durch die kennzeichnenden Merkmale des Anspruches 1 gelöst. Vorteilhafte Ausgestaltungen der Erfindung sind in den abhängigen Ansprüchen angegeben.

Gemäß der Erfindung weist der Rundfunkempfänger bzw. ein Autoradio mehrere NF-Eingänge auf, so daß die NF-Signalverarbeitung nicht mehr im externen Kommunikationsmittel erfolgt, sondern im Autoradio, wobei hier die Möglichkeiten des Bedien- und Hörkomforts des Autoradios ausgenützt werden.

An die NF-Eingänge des Autoradios können externe Kommunikationsmittel angeschlossen werden, so wird der Anschluß von Funkgeräten, Autotelefon, Bordcomputern usw. ermöglicht. Wenn an einem solchen Eingang ein NF-Signal anliegt, erfolgt seine Verarbeitung nicht mehr im externen Gerät, sondern in der NF-Signalverarbeitungseinheit des Autoradios. Dabei wird das eigene Signal unterdrückt und das externe durchgeschaltet. Die Steuerung des Umschaltens übernimmt die Mikroprozessoreinheit des Autoradios. In dieser Einheit werden die eingehenden Signale verarbeitet. Es wird hier festgestellt, ob ein externes Signal eingeht, und wenn ja, von welcher Art es ist, z.B. Funkgerät oder Autotelefon, usw. Diese Daten werden verarbeitet und es werden dann entsprechende Schalt- oder Einstellsignale ausgegeben. Bei der Ausgabe der Schaltsignale werden auch eventuell einspeicherte Prioritäten berücksichtigt. Diese Prioritäten können fest vorgegeben oder vom Benutzer eingestellt werden. Diese Eingaben umfassen zunächst die Rangfolge der Bearbeitung bei gleichzeitigem Eingang mehrerer Signale und weiterhin die Unterbrechung einer bestehenden Signalabarbeitung bei Eingang eines anderen. So wird z.B. bei Eingang eines Funksignals ein Telefongespräch nicht unterbrochen, während Informationen des Bordcomputers dann unterdrückt werden.

Die Einstellsignale beziehen sich auf die Regelung der Lautstärke, der Klangfarbe, der Balance und des Faders. Diese werden so eingestellt, daß eine optimale Wiedergabe der eingehenden Nachricht erreicht wird, wobei die entsprechenden Einstellwerte vom Bediener oder Kundendienst vorher eingegeben und in Speichern abgelegt werden. So ist es z.B. von Vorteil die Regelung der Balance und des Faders so zu stellen, daß bei einem angeschlossenen Funkgerät nur der dem Fahrer zugeordnete Lautsprecher angesteuert wird, während die anderen stummgeschaltet sind. Diese Einstellungen können im Betrieb von Fall zu Fall nach der automatischen Einstellung auch noch manuell verändert werden. Neben den Einstellungen, die der besten Hörbarkeit dienen ist es auch erforderlich, daß das Autoradio sicher eingeschaltet ist, wenn ein externes Kommunikationsmittel eingeschalt ist. Diese Aufgabe kann auf verschiedene Weise gelöst werden. Eine Möglichkeit ist ein separates Schaltsignal, das vom externen Gerät beim Einschalten erzeugt wird, und das über die Schnittstelle zum Netzteil des Autoradios geführt wird. Weiterhin kann dem NF-Signal des externen Gerätes eine Gleichspannung überlagert werden. Hier werden im Autoradio Gleich- und Wechselanteil des Signals getrennt, wobei der Gleichanteil zum Netzteil geführt wird und dort als Schaltsignal dient.

Das Autoradio kann auch so ausgeführt sein, daß es ständig in Bereitschaftsbetrieb ist und Schaltsignale für das Netzteil vom Mikroprozessor ausgegeben werden.

Mit der erfindungsgemäßen Anordnung ist es möglich externe Kommunikationsmittel billiger und platzsparender herzustellen, da die NF-Signalverarbeitungseinheit in den externen Geräten wegfällt. Weiterhin verlagert sich die Bedienung auf das Autoradio, was zur Folge hat, daß die Übersichtlichkeit des Bedienteils des externen Gerätes erhöht wird, ohne daß die Bedienung des Autoradios unübersichtlich wird.

Die Erfindung wird nun an Hand von zwei Blockschaltbildern beschrieben.

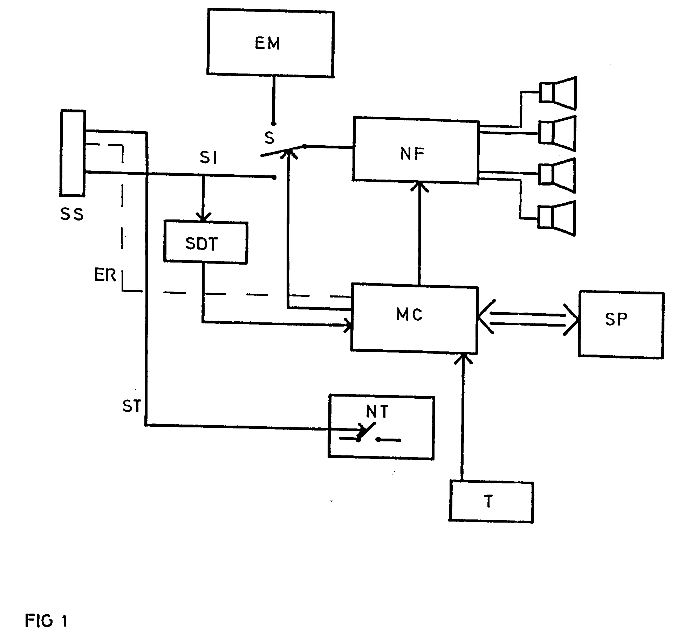

In Figur 1 wird eine Einrichtung gemäß der Erfindung gezeigt, bei der eine Schnittstelle für ein Funkgerät vorhanden ist. Von der Schnittstelle führt eine Steuerleitung ST zum Netzteil des Autoradios. Hier wird ein Schalter gesteuert, der das Autoradio in Betrieb setzt, wenn das Funkgerät eingeschaltet wird. Damit ist gewährleistet, daß das Radio bei einer Information des Funkgerätes eingeschaltet ist und so das ankommende externe NF-Signal verarbeiten kann.

Aus der Schnittstelle SS wird die NF-Signalleitung SI an einen Anschluß eines Schalters gegeben, der die NF-Signalverarbeitung bei einem eingehenden Funksignal vom Empfänger des Autoradios auf das Signal SI schaltet Das Signal SI wird weiterhin auf einen Signaldetektor SDT gegeben, der feststellt, ob ein Funksignal eingeht oder nicht und eine entsprechende Ausgabe an den Mikrocomputer MC gibt, der daraufhin den Schalter S ansteuert. Der Mikrocomputer MC steuert weiterhin die NF-Signalverarbeitungseinheit NF an, um bestimmte notwendige oder vorteilhafte Einstellungen vorzunehmen. Zu diesen Einstellungen gehörten, eine Prioritätsliste eine bestimmte Mindestlautstärke, eine auf die externe Quelle abgestimmte Klangeinstellung und die Einstellung der Balance und des Faders auf den Fahrerlautsprecher. Diese Voreinstellungen werden in einem Speicher SP abgelegt, wobei dieser Speicher ein ROM sein kann, in den die Daten vom Hersteller abgelegt werden, oder ein nichtflüchtiger RAM-Baustein, in den die Daten auch vom Benutzer über eine Tastatur T eingegeben oder abgeändert werden können. Wenn man die Schnittstelle SS als Anschlußmöglichkeit für verschiedene Quellen vorsieht, kann man noch eine Erkennungsleitung ER, die in Figur 1 gestrichelt dargestellt ist, einfügen, über die ein einer externen Quelle entprechendes Erkennungssignal zum Mikrocomputer MC geführt wird. Dieser hat dann die Aufgabe, bei einem eingehenden Signal einer externen Quelle eine entsprechende, vorher abgespeicherte Voreinstellung der Lautstärke, des Klangbildes und des Faders vom Speicher abzurufen und damit die NF-Verarbeitungseinheit einzustellen.

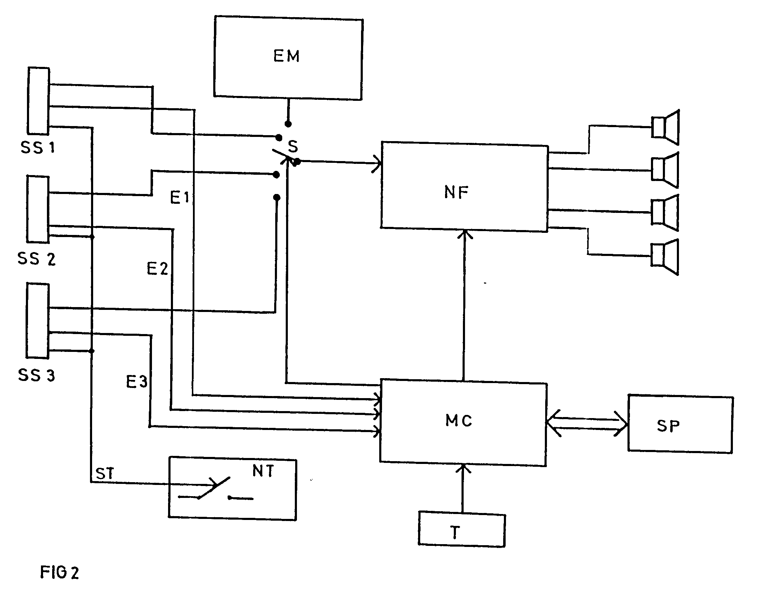

In Figur 2 ist eine erfindungsgemäße Anordnung mit mehreren Schnittstellen SS1 bis SS3 dargestellt. In der folgenden Beschreibung werden nur die Unterschiede zu Figur 1 erläutert.

Das Autoradio wird hier automatisch eingeschaltet, wenn eines der an die Schnittstellen angeschlossenen Geräte in Betrieb genommen wird. Auf die Erkennungsleitungen E1 bis E3 muß nicht eine für ein Gerät spezifische Signalform von der externen Quelle gegeben werden, sondern man kann jeder Schnittstelle ein Gerät zuordnen und es reicht dann bei einer eingehenden Information ein einfaches Signal; die Auswertung erfolgt hier durch die Stelle, an der das Signal eingeht, nicht durch die Signalform. Der Mikrocomputer MC steuert wieder den Schalter S an, der hier jedoch mehrere Positionen einnehmen kann. In der Ansteuerung der NF-Signalverarbeitungseinheit NF ändert sich gegenüber der Beschreibung der Figur 1 nichts.

In beiden Ausführungsformen (nach Figur 1 und Figur 2) werden die Funktionen, die das Autoradio besitzt auch für die externen Kommunikationsmittel genutzt. Als besonders vorteilhaft kann z.B. geschwindigkeitsabhängige Lautstärkeregelung aufgeführt werden.

Die Ausführung der Schnittstellen kann in herkömmlicher Weise erfolgen oder vorteilhaft als verschleißfreie oder -arme optische Schnittstelle mit Optokopplern ausgeführt sein.

## Patentansprüche

1. Einrichtung zur Verbindung und zum gleichzeitigen Betrieb eines mikrocomputergesteuerten Rundfunkempfängers mit anderen Kommunikationsmitteln in einem Kraftfahrzeug,
**dadurch gekennzeichnet,** daß
- am Rundfunkempfänger eine oder mehrere Schnittstellen (SS, SS1, SS2, SS3) zur Verbindung von externen Signalquellen mit der NF-Signalverarbeitungseinheit (NF) des Rundfunkempfängers angeordnet sind,
- der im Rundfunkempfänger enthaltene Mikrocomputer (MC) mit einer Signaldetektoreinheit (SDT) und einem Schalter (S) verbunden ist, wobei die Signaldetektoreinheit (SDT) bei Vorliegen eines Eingangssignales an der wenigstens einen Schnittstelle (SS, SS1, SS2, SS3) ein Steuersignal an den Mikrocomputer (MC) gibt, und der Mikrocomputer (MC) den Schalter (S) so ansteuert, daß entweder ein externes Signal (SI) oder ein Empfängersignal des Rundfunkträgers an die NF-Signalverarbeitungseinheit (NF) weitergeleitet wird, und
- die wenigstens eine Schnittstelle (SS, SS1, SS2, SS3) einen Anschluß für ein Steuersignal (ST) aufweist, der mit dem Netzteil (NT) des Rundfunkempfängers verbunden ist, wobei das Netzteil (NT) eingeschaltet wird, wenn es nicht bereits vorher eingeschaltet war.

2. Einrichtung nach Anspruch 1,
**dadurch gekennzeichnet,** daß
der Mikrocomputer (MC) so ausgeführt ist, daß er die Art des externen Signals durch die Auswertung des externen NF-Signals feststellt.

3. Einrichtung nach einem der Ansprüche 1 oder 2,
**dadurch gekennzeichnet,** daß
die wenigstens eine Schnittstelle (SS, SS1, SS2, SS3) einen Anschluß für ein Erkennungssignal (ER) aufweist, das die Art des externen Gerätes angibt.

4. Einrichtung nach einem oder mehreren der Ansprüche 1 bis 3,
**dadurch gekennzeichnet,** daß
die Art der externen Quelle vom Benutzer eingegeben wird.

5. Einrichtung nach einem oder mehreren der Ansprüche 1 bis 4,
**dadurch gekennzeichnet,** daß
der Mikrocomputer (MC) mit einem Speicher (SP) verbunden ist, und bei Verarbeitung eines externen NF-Signals eine für die Art des externen Gerätes abgespeicherte, optimale Einstellung der Lautstärke, des Klangbildes, der Balance und des Faders abgerufen und vom Mikrokomputer an die NF-Signalverarbeitungseinheit gegeben wird.

6. Einrichtung nach Anspruch 5,
**dadurch gekennzeichnet,** daß
die optimalen Einstelldaten für die möglichen externen Signalquellen in dem Speicher (SP) abgelegt sind und diese Daten vom Benutzer über eine Tastatur eingegeben bzw. verändert werden können.

7. Einrichtung nach einem oder mehreren der Ansprüche 1 bis 6,
**dadurch gekennzeichnet,** daß
der Speicher (SP) Prioritätsinformationen enthält, die der Mikrocomputer (MC) bei Eingang mehrerer externer NF-Signale auswertet, und unter Berücksichtigung der Prioritätsinformationen eines der externen Signale durch Ansteuerung des Schalters (S) durchschaltet.

8. Einrichtung nach einem oder mehreren der Ansprüche 1 bis 7,
**dadurch gekennzeichnet,** daß
die Schnittstellen bzw. Schnittstelle (SS, SS1, SS2, SS3) als Optokoppler ausgebildet sind bzw. ist.

## Claims

1. Device for the connection of a microcomputer-controlled broadcast receiver to other communication means and for their simultaneous operation in a motor vehicle, characterized in that
- one or more interfaces (SS, SS1, SS2, SS3) are arranged on the broadcast receiver for the connection of external signal sources to the AF signal processing unit (NF) of the broadcast receiver,
- the microcomputer (MC) contained in the broadcast receiver is connected to a signal detector unit (SDT) and a switch (S), the signal detector unit (SDT) transmitting a control signal to the microcomputer (MC) in the presence of an input signal on the at least one interface (SS, SS1, SS2, SS3) and the microcomputer (MC) driving the switch (S) in such a way that either an external signal (SI) or a receiver signal of the broadcast carrier is routed to the AF signal processing unit (NF), and
- the at least one interface (SS, SS1, SS2, SS3) has a connection for a control signal (ST) which is connected to the power supply (NT) of the broadcast receiver, the power supply (NT) being switched on if it had not already been switched on previously.

2. Device according to Claim 1, characterized in that the microcomputer (MC) is designed in such a way that it establishes the type of the external signal by evaluating the external AF signal.

3. Device according to one of Claims 1 or 2, characterized in that the at least one interface (SS, SS1, SS2, SS3) has a connection for an identification signal (ER) which specifies the type of the external device.

4. Device according to one or more of Claims 1 to 3, characterized in that the type of the external source is entered by the user.

5. Device according to one or more of Claims 1 to 4, characterized in that the microcomputer (MC) is connected to a memory (SP) and, upon processing an external AF signal, an optimal adjustment of the loudness, the sound pattern, the balance and the fader, stored for the type of the external device, is retrieved and output by the microcomputer to the AF signal processing unit.

6. Device according to Claim 5, characterized in that the optimal adjustment data for the possible external signal sources are stored in the memory (SP) and these data can be entered or changed by the user via a keyboard.

7. Device according to one or more of Claims 1 to 6, characterized in that the memory (SP) contains priority information which the microcomputer (MC) evaluates in the event of the input of a plurality of external AF signals and switches through one of the external signals by driving the switch (S), taking into account the priority information.

8. Device according to one or more of Claims 1 to 7, characterized in that the interfaces or interface (SS, SS1, SS2, SS3) are or is designed as (an) optocoupler(s).

## Revendications

1. Dispositif pour relier et faire fonctionner simultanément un récepteur radio commandé par un micro-ordinateur avec d'autres moyens de communication dans un véhicule automobile,
caractérisé en ce que
- dans le récepteur radio sont disposées une ou plusieurs interfaces (SS,SS1,SS2,SS3) servant à relier des sources extérieures de signaux à l'unité (NF) de traitement des signaux à basse fréquence du récepteur radio,
- le micro-ordinateur (MC) contenu dans le récepteur radio est relié à une unité de détection de signaux (SDT) et à un commutateur (S), l'unité de détection de signaux (SDT) envoyant un signal de commande au micro-ordinateur (MC) dans le cas de la présence d'un signal d'entrée au niveau d'au moins une interface (SS,SS1,SS2,SS3), et le micro-ordinateur (MC) commandant le commutateur (S) de telle sorte qu'un signal extérieur (SI) ou un signal de réception de la porteuse radio est envoyé à l'unité de traitement de signaux à basse fréquence (NF), et
- la ou les interfaces (SS,SS1,SS2,SS3) comportent une borne pour un signal de commande (ST), qui est reliée à la partie secteur (NT) du récepteur radio, la partie secteur (NT) étant branchée lorsqu'elle n'a pas déjà été branchée auparavant.

2. Dispositif selon la revendication 1, caractérisé en ce que le micro-ordinateur (MC) est agencé de telle sorte qu'il fixe le type du signal extérieur au moyen de l'évaluation du signal extérieur à basse fréquence.

3. Dispositif selon l'une des revendications 1 ou 2, caractérisé en ce qu'au moins une interface (SS,SS1,SS2, SS3) possède une borne pour un signal d'identification (ER), qui indique le type d'appareil extérieur.

4. Dispositif selon une ou plusieurs des revendications 1 à 3, caractérisé en ce que le type de la source extérieure est introduit par l'utilisateur.

5. Dispositif selon une ou plusieurs des revendications 1 à 4, caractérisé en ce que le micro-ordinateur (MC) est relié à une mémoire (SP) et que, lors du traitement d'un signal extérieur à basse fréquence, un réglage optimum de l'intensité, de l'image sonore, de l'équilibre et du fading, qui est mémorisé pour le type de l'appareil extérieur, est appelé et est envoyé par le micro-ordinateur à l'unité de traitement de signaux à basse fréquence.

6. Dispositif selon la revendication 5, caractérisé en ce que les données optimales de réglage pour les sources extérieures possibles de signaux sont mémorisées dans la mémoire (SP) et ces données peuvent être introduites ou modifiées par l'utilisateur au moyen d'un clavier.

7. Dispositif selon une ou plusieurs des revendications 1 à 6, caractérisé en ce que la mémoire (SP) contient des informations de priorité, que le micro-ordinateur (MC) évalue lors de l'arrivée de plusieurs signaux extérieurs à basse fréquence, et transmet l'un des signaux extérieurs, moyennant la commande du commutateur (S), en tenant compte des informations de priorité.

8. Dispositif selon une ou plusieurs des revendications 1 à 7, caractérisé en ce que la ou les interfaces (SS,SS1,SS2,SS3) sont réalisées sous la forme d'optocoupleurs.
